# EUROPÄISCHE PATENTSCHRIFT

(11) **EP 0 503 522 B1**
(45) Veröffentlichungstag und Bekanntmachung des Hinweises auf die Patenterteilung: **17.05.1995**
(21) Anmeldenummer: 92103966.5
(22) Anmeldetag: 09.03.1992
(51) Int. Cl.: B23Q 3/12

(54) **Werkzeugmaschine mit auswechselbaren Bearbeitungsköpfen**
Machine-tool with exchangeable tool-heads
Machine-outil, munie des têtes de travail interchangeables

(30) Priorität: 13.03.1991 DE 4108038
(43) Veröffentlichungstag der Anmeldung: 16.09.1992
(73) Patentinhaber: DÖRRIES SCHARMANN GmbH, D-41236 Mönchengladbach (DE)
(72) Erfinder: Esser, Karl-Josef, W-4050 Mönchengladbach 5 (DE)
(74) Vertreter: Rehders, Jochen, Dipl.-Ing.

(56) Entgegenhaltungen:
- EP-A- 0 074 452
- DE-A- 4 006 057
- FR-A- 2 576 536

## Beschreibung

Die Erfindung betrifft eine Werkzeugmaschine mit einer in einem Träger gelagerten Arbeitsspindel, einem auswechselbaren, mit dem Träger kuppelbaren Bearbeitungskopf, einer mit der Arbeitsspindel kuppelbaren Werkzeugspindel im Bearbeitungskopf und radialen, komplementären Bajonettklauen zum Verriegeln des Bearbeitungskopfes am Träger (siehe EP-A-0 074 452).

Derartige Werkzeugmaschinen sind bekannt und erlauben es, Werkstücke zusätzlich zur üblichen Bearbeitung mittels in die Bearbeitungsspindel eingesetzter Werkzeuge mittels angesetzter, auswechselbarer Bearbeitungsköpfe zu bearbeiten. Diese Bearbeitungsköpfe können aus Winkelfräsköpfen, Universalfräsköpfen oder Planscheiben bestehen. Bei bekannten Werkzeugmaschinen dieser Art sind die Bearbeitungsköpfe verhältnismäßig kompliziert aufgebaut, da sie sämtliche Einrichtungen zur Bearbeitung eines Werkstucks mittels dieser Bearbeitungsköpfe aufweisen. Dazu gehören Vorschubeinrichtungen sowie Winkelverstellvorrichtungen für die Werkzeuge an den Bearbeitungsköpfen, um sie gegenüber den zu bearbeitenden Werkstücken winkelgerecht einstellen zu können.

In der europäischen Patentanmeldung 0 074 452 ist eine Werkzeugmaschine mit einer in einem Träger unter Zwischenschaltung einer drehbaren und axial verschiebbaren Buchse, unabhängig von dem Träger axial verschiebbar gelagert, die sich mit einer Werkzeugspindel in einem auswechselbaren, mit dem Träger kuppelbaren Bearbeitungskopf kuppeln läßt. An der Buchse sind radial nach außen gerichtete Bajonettklauen angeordnet, die sich mit radialen, komplementären Bajonettklauen am Bearbeitungskopf in Eingriff bringen lassen und durch eine Axialverschiebung der Buchse eine drehfeste Verbindung des Bearbeitungskopfes mit dem Träger herbeiführen. Mittels der in dem Träger axial verschiebbaren und mittels eines Antriebs drehbaren Buchse läßt sich der Bearbeitungskopf in eine vorbestimmbare Winkelstellung mit Bezug auf den Träger bringen.

Der Erfindung liegt die Aufgabe zugrunde, eine Werkzeugmaschine mit auswechselbaren Bearbeitungsköpfen zu schaffen, die einfach aufgebaut ist, eine schnelle und sichere Verbindung zwischen einem Bearbeitungskopf und der Werkzeugmaschine herzustellen gestattet, den Einsatz vereinfachter Bearbeitungsköpfe ermöglicht.

Ausgehend von dieser Aufgabenstellung wird bei einer Werkzeugmaschine der eingangs erwähnten Art vorgeschlagen, daß die Antriebsspindel direkt in einem Träger drehbar und axial unverschiebbar gelagert und nur zusammen mit dem Träger axial verschiebbar ist und daS ein wechselweise mit der Antriebsspindel und dem Bearbeitungskopf drehfest kuppelbarer und entkuppelbarer, axial mittels einer oder mehreren Hydraulik- oder Pneumatik-Kolben-Zylinder-Einheiten verschiebbarer, drehbarer Bajonettring vorgesehen ist, wobei die Bajonettklauen am Bajonettring und am Bearbeitungskopf vorgesehen sind. Die Bajonettklauen können vorteilhafterveise am Bearbeitungskopf nach innen gerichtet und am Bajonettring nach außen gerichtet sein. Die Verbindung zwischen dem Bearbeitungskopf und dem Träger der Werkzeugmaschine kann dabei derart erfolgen, daß der Bearbeitungskopf und der Träger mit auf Lücke gestellten Bajonettklauen zusammengeschoben werden und danach der Bajonettring so verdreht wird, daß die Bajonettklauen hintereinanderliegen. Danach läßt sich der Bajonettring axial verschieben und spannt dadurch den Bearbeitungskopf an den Träger der Werkzeugmaschine. Gleichzeitig erfolgt die Kupplung der Antriebsspindel im Träger mit der Werkzeugspindel im Bearbeitungskopf.

Befindet sich der Bearbeitungskopf in einem Magazin für Bearbeitungsköpfe, wird der üblicherweise axial verschiebbare Träger der Werkzeugmaschine an den Bearbeitungskopf herangefahren, so daß der Bajonettring mit auf Lücke stehenden Bajonettklauen so weit in den Bearbeitungskopf hineingefahren werden kann, daß sich die Bajonettklauen des Bajonettrings durch Verdrehen hinter die Bajonettklauen des Bearbeitungskopfes bringen lassen. Nach dem Verriegeln des Bearbeitungskopfes am Träger der Werkzeugmaschine läßt sich der Bearbeitungskopf aus dem Magazin durch Zurückfahren des Trägers entnehmen. Bei sehr großen Werkzeugmaschinen mit sehr schweren und große Abmessungen aufweisenden Bearbeitungsköpfen kann ein solcher Bearbeitungskopf auch mittels eines Kranes an den Träger der Werkzeugmaschine heran- und in Position gebracht werden. In diesem Fall kann sich ein axiales Verfahren des Trägers zum Kuppeln und Verriegeln des Bearbeitungskopfes erübrigen.

Vorteilhafterweise können die Verstellmittel aus der Antriebsspindel und einer oder mehreren Hydraulik- oder Pneumatik-Kolben-Zylinder-Einheiten bestehen, wovon die Antriebsspindel das Verdrehen des Bajonettrings über geeignete Kupplungsmittel und die Hydraulik- oder Pneumatik-Kolben-Zylinder-Einheit das axiale Verschieben des Bajonettrings und damit Spannen des Bearbeitungskopfes am Träger der Werkzeugmaschine bewirken.

Die Hydraulik- oder Pneumatik-Kolben-Zylinder-Einheit läßt sich besonders einfach gestalten, wenn sie als abgedichtet im Träger geführter Ringkolben ausgebildet und koaxial zur Antriebsspindel angeordnet ist. Dieser Ringkolben läßt sich in besonders einfacher Weise einfachwirkend ausführen, wenn er mittels Federn in Richtung des Arbeitsspindelendes und durch Druckbeaufschlagung in die entgegengesetzte Richtung bewegbar ist oder umgekehrt.

Da der Ringkolben die Axialverschiebung des Bajonettrings bewirkt, während mittels der Antriebsspindel ein Verdrehen des Bajonettrings erreichbar ist, kann der Bajonettring mit dem Ringkolben drehbar und unverschiebbar gekuppelt sein.

Da der Bajonettring andererseits zwar mit der Antriebsspindel drehfest kuppelbar sein soll, andererseits jedoch die Möglichkeit gegeben sein muß, das sich die Antriebsspindel frei vom Bajonettring drehen kann, kann der Bajonettring wenigstens einen radial nach innen gerichteten, wahlweise in eine Ringnut oder eine Axialnut in der Antriebsspindel eingreifenden Vorsprung aufweisen.

Mittels des Ringkolbens läßt sich somit der Bajonettring relativ zur Antriebsspindel axial verschieben, so daß der radiale Vorsprung entweder in die Ringnut eingreift, so daß sich die Antriebsspindel in dieser Stellung frei vom Bajonettring drehen kann, oder in die Axialnut der Antriebsspindel eingreift und dann mit der Antriebsspindel in Drehverbindung steht.

Durch diese Drehverbindung zwischen dem Bajonettring und der Antriebsspindel läßt sich der Bajonettring zum Kuppeln mit einem Bearbeitungskopf Zunächst mit den Bajonettklauen auf Lücke stellen, so daß sich der Bajonettring bis hinter die Bajonettklauen des Bearbeitungskopfes in diesen hineinbewegen läßt. Danach läßt sich der Bajonettring mittels der Antriebsspindel so weiterdrehen, daß Zahn gegen Zahn der Bajonettklauen liegen und das Verriegeln über die Axialverschiebung des Bajonettrings erfolgen kann.

Die Antriebsverbindung zwischen dem Bajonettring und der Antriebsspindel dient noch einem weiteren Zweck, nämlich den Arbeitskopf in eine gewünschte Winkelstellung mit Bezug auf den Träger der Werkzeugmaschine zu drehen. Zu diesem Zweck kann der Bajonettring wenigstens einen axial gerichteten, in eine Axialnut im Bereich der Bajonettklauen des Bearbeitungskopfes einschiebbaren Vorsprung aufweisen. Dieser Vorsprung gelangt stets dann in die Axialnut im Bereich der Bajonettklauen des Bearbeitungskopfes, wenn der Spannvorgang durchgeführt wird. Nach dem Lösen der Verriegelung des Bearbeitungskopfes gegen den Träger der Werkzeugmaschine ist der Bearbeitungskopf gegenüber dem Träger der Werkzeugmaschine frei drehbar und läßt sich mittels der Antriebsspindel in eine gewünschte Winkelstellung relativ zum Träger der Werkzeugmaschine bringen.

Um den Bearbeitungskopf selber möglichst einfach zu gestalten, kann an die dem Träger der Werkzeugmaschine zugekehrte Fläche des Bearbeitungskopfes ein Adapterring angeschraubt sein, der die Bajonettklauen und weitere, das Ankuppeln des Bearbeitungskopfes an den Träger der Werkzeugmaschine erleichternde Einrichtungen aufweist. So können der Adapterring und der Träger vorteilhafterweise zusammenwirkende Zentrierkonusse aufweisen. Des weiteren können der Bearbeitungskopf und der Träger miteinander zusammenwirkende Stirnverzahnungen aufweisen, die nach dem Verriegeln den Formschluß zwischen dem Bearbeitungskopf und dem Träger der Werkzeugmaschine gewährleisten.

Um beim Lösen der Verriegelung ein leichtes Trennen des Bearbeitungskopfes vom Träger der Werkzeugmaschine zu erreichen und um nach dem Entriegeln die Relativdrehung des Bearbeitungskopfes gegenüber dem Träger der Werkzeugmaschine durchführen zu können, können zwischen dem Träger und dem Bearbeitungskopf Federelemente angeordnet sein. Diese Federelemente sorgen dafür, daß beim Entriegeln der axiale Vorsprung am Bajonettring in der Axialnut im Bereich der Bajonettklauen des Bearbeitungskopfes verbleibt, solange der Bearbeitungskopf bei der durch die Entriegelungsbewegung mittels des Ringkolbens bewirkten Axialverschiebung nicht gegen einen festen Anschlag stößt. Dieser feste Anschlag ist z. B. dann gegeben, wenn der Bearbeitungskopf in das Magazin für Bearbeitungsköpfe eingeführt und gegen einen darin befindlichen Anschlag fährt.

Demselben Zweck dient eine auf der Werkzeugspindel angeordnete, axial verschiebbare, federbeaufschlagte, mit der Werkzeugspindel drehfest gekuppelte, mit der Antriebsspindel kuppelbare Kupplungsscheibe.

An den einander zugekehrten Stirnseiten des Trägers der Werkzeugmaschine und des Bearbeitungskopfes können Energieandockungsvorrichtungen angeordnet sein, die z. B. aus automatischen Kupplungen für Hydraulik- oder Pneumatikleitungen oder für elektrische Kontakte bestehen können. Auf diese Weise lassen sich Steuerbefehle und die zum Ausführen der Steuerbefehle erforderliche Energie automatisch mit dem Bearbeitungskopf kuppeln.

Die Erfindung wird nachstehend anhand eines in der Zeichnung dargestellten Ausführungsbeispiels des näheren erläutert. In der Zeichnung zeigen:
- Fig. 1: einen schematischen Schnitt durch einen Teil des Bearbeitungskopfes und des Trägers der Werkzeugmaschine mit Antriebsspindel in der Stellung unmittelbar vor dem Kuppeln,
- Fig. 2: dieselbe Darstellung nach dem Kuppeln, jedoch vor dem Verriegeln,
- Fig. 3: dieselbe Darstellung im verriegelten Zustand,
- Fig. 4: dieselbe Darstellung im gekuppelten, jedoch entriegelten Zustand,

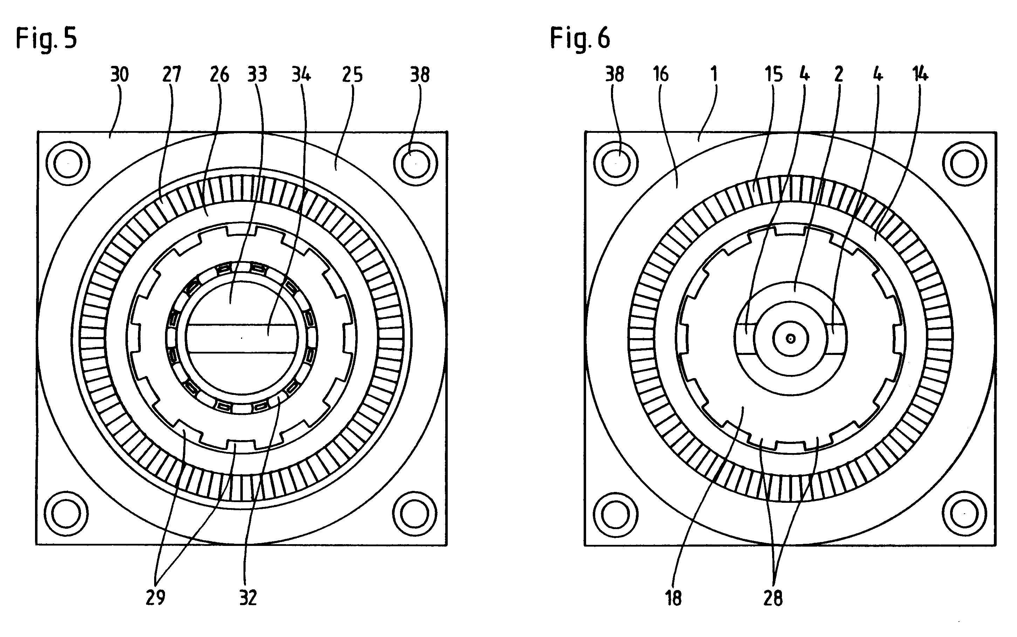

- Fig. 5: eine Ansicht der Stirnseite des Bearbeitungskopfes und
- Fig. 6: eine Ansicht der Stirnseite des Trägers der Bearbeitungsmaschine.

Ein Träger in Form eines quadratischen Balkens 1 ist axial verschiebbar in nicht dargestellter Weise an einer Werkzeugmaschine gelagert. Im Balken 1 ist eine Antriebsspindel 2 mittels Wälzlagern 3 drehbar und axial unverschiebbar gelagert. Diese Antriebsspindel 2 läßt sich an ihrem freien Ende mit einem Bearbeitungswerkzeug bestücken und direkt zur Bearbeitung eines Werkstücks verwenden. Im dargestellten Ausführungsbeispiel dient die Antriebsspindel 2 zum Antrieb einer Werkzeugspindel 31 in einem mit dem Träger 1 kuppelbaren Bearbeitungskopf 30. Dieser Bearbeitungskopf 30 ist im einzelnen nicht dargestellt und kann als Winkelfräskopf, Universalfräskopf oder als Planscheibe gestaltet sein.

Am freien Ende der Antriebsspindel 2 ist eine Quernut 4 angeordnet, die zur Kupplung mit der Werkzeugspindel 31 dient, wie später im einzelen geschildert wird.

Im Bereich des freien Endes der Antriebsspindel 2 sind eine Ringnut 5 und mindestens eine von dieser Ringnut 5 ausgehende Axialnut 6 angeordnet.

Koaxial zur Antriebsspindel 2 ist ein Ringkolben 7 mit einem rohrförmigen Schaft 8 mittels Dichtungen 9, 10 abgedichtet im Balken 1 geführt. Zwischen dem Balken und dem Ringkolben 7 ist ein mit Druckmittel beaufschlagbarer Ringraum 11 vorgesehen. Der Ringkolben 7 ist einfachwirkend und bewegt sich bei Beaufschlagung des Ringraums 11 mit Druckmittel gegen die Wirkung von Druckfedern 12 nach rechts und bei Entlastung des Ringraums 11 von Druckmittel unter der Wirkung der Druckfedern nach links. Die Druckfedern stützen sich über einen Druckring 13 an einem Außenring der Wälzlager 3 ab.

An der Stirnseite des Balkens 1 ist ein Zentrierkonus 14 angeordnet, der in eine Stirnverzahnung 15, die als Hirtverzahnung gestaltet sein kann, übergeht. Anstelle einer Stirnverzahnung 15 können an der Stirnseite des Balkens 1 auch ein oder mehrere Radialkeile oder Nuten angeordnet sein, die mit entsprechenden Radialnuten oder Radialkeilen im Bearbeitungskopf 30 zusammenwirken.

Konzentrisch zum Zentrierkonus 14 und zur Stirnverzahnung 15 ist ein Schutzring 16 angeorndet, der gleichzeitig als Träger für eine Druckfederanordnung 17 dient. Der Zweck dieser Druckfederanordnung 17 wird später erläutert.

Ein Bajonettring 18 ist mit dem Schaft 8 des Ringkolbens 7 drehbar, jedoch axial unverschiebbar gekuppelt. Zu diesem Zweck weisen der Schaft 8 und der Bajonettring 18 je eine Ringnut 19, 20 auf, in die ein nach innen gerichteter radialer Umfangsvorsprung 21 bzw. ein nach außen gerichteter axialer Umfangsvorsprung 22 eingreifen. Auf dem äußeren Umfang des Bajonettrings 18 sind radial nach außen gerichtete Bajonettklauen 28 angeordnet. Des weiteren ist an der Stirnfläche des Bajonettrings 18 wenigstens eine radial nach innen gerichtete Nase 23 angeordnet, im dargestellten Ausführungsbeispiel handelt es sich um zwei diametral gegenüberliegende radiale Nasen 23, die einstückig mit dem Bajonettring 18 hergestellt oder an den Bajonettring 18 angeschraubt sein können.

Des weiteren weist der Bajonettring 18 mindestens eine sich axial erstreckende Nase 24 auf, die einstückig mit einer Bajonettklaue am Bajonettring 18 hergestellt oder an eine solche Bajonettklaue angeschraubt sein kann.

Am Bearbeitungskopf 30 ist ein Adapterring 25 angeschraubt, der einen Zentrierkonus 26 aufweist, der mit dem Zentrierkonus 14 am Balken 1 im verriegelten Zustand zusammenwirkt. An der Stirnfläche des Adapterrings 25 befindet sich eine Stirnverzahnung 27, die im verriegelten Zustand mit der Stirnverzahnung 15 am Balken 1 zusammenwirkt. Der Adapterring 25 weist des weiteren radial nach innen gerichtete Bajonettklauen 29 auf, die mit den radial nach außen gerichteten Bajonettklauen 28 am Adapterring 18 zusammenwirken. Im Bereich einer radial nach innen gerichteter Bajonettklaue der Bajonettklauen 29 am Adapterring 25 befindet sich eine Axialnut 37, die mit der axialen Nase 24 am Bajonettring 18 zusammenwirkt.

Im Bearbeitungskopf 30 ist die Werkzeugspindel 31 mittels Wälzlagern gelagert, von denen nur ein Wälzlager 32 dargestellt ist. Auf dem freien Ende der Werkzeugspindel 31 ist eine Kupplungsscheibe 33 axial verschiebbar jedoch drehfest angeordnet. Die Kupplungsscheibe 33 wird mittels Druckfedern 35 verschoben und weist einen Querkeil 34 auf, der mit der Quernut 4 in der Antriebsspindel 2 zusammenwirkt.

An den Stirnseiten des Bearbeitungskopfes 30 und des Balkens 1 sind Energieandockungseinrichtungen 38 angeordnet, die sich in den Ecken des quadratisch geformten Bearbeitungskopfes 30 und des quadratischen Balkens 1 befinden. Diese Energieandockungseinrichtungen 38 sind nur schematisch dargestellt und können aus automatischen Kupplungen für Druckmittelleitungen und/oder aus Steckkontakten für elektrische Leitungen zur Energie- oder Steuersignalübertragung dienen.

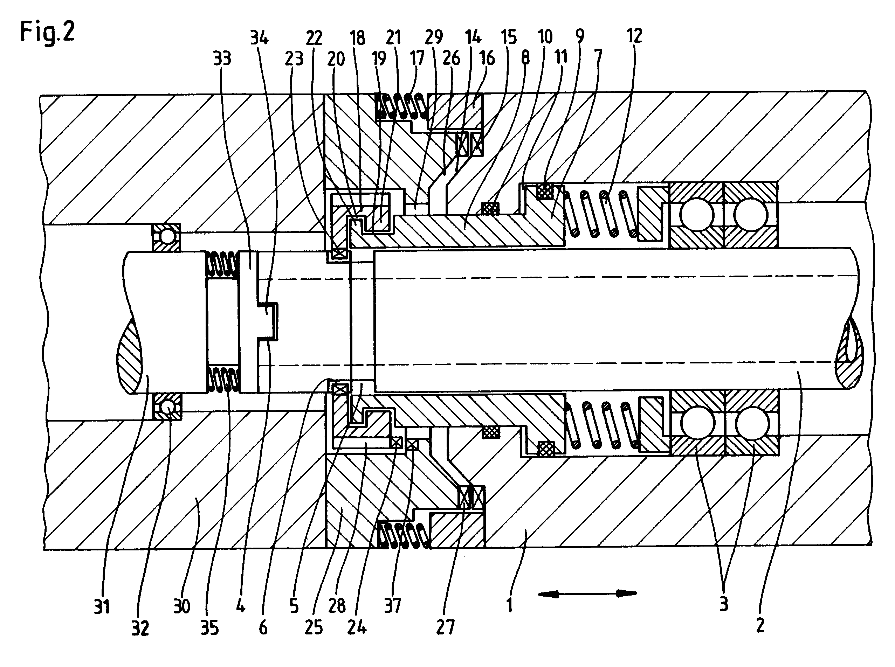

Um einen Bearbeitungskopf 30 mit der Werkzeugmaschine zu kuppeln, wird angenommen, daß sich der Bearbeitungskopf 30 in einem Magazin für Bearbeitungsköpfe befindet und mit seinem nicht dargestellten Ende an einem Anschlag anliegt. Der Balken 1 mit dem Ringkolben 7 und dem Bajonettring 18 in der dargestellten Stellung werden zusammen mit der Spindel 2 in Richtung des Adapterrings 25 vorgefahren. In der dargestellten Stellung, die sich über entsprechende Steuermittel an der Werkzeugmaschine und eine vorgebbare Indexierung einstellen läßt, liegen die Bajonettklauen 28 am Bajonettring 18 und die Bajonettklauen 29 am Adapterring 25 Lücke auf Lücke, so daß sich die Spindel 2 mit dem Bajonettring 18 bis auf die in Fig. 2 dargestellte axiale Stellung vorfahren läßt.

Dabei erfolgt die Kupplung der Spindel 2 mit der Werkzeugspindel 31 über die Kupplungsscheibe 33, deren Querkeil 34 in die Quernut 4 der Antriebsspindel 2 eingreift. In der in Fig. 2 dargestellten Stellung ist die Spindel 2 mit dem Bajonettring 18 bereits so verdreht, daß sich nunmehr die Bajonettklauen 28, 29 Klaue auf Klaue gegenüberstehen. Dieses Verdrehen des Bajonettrings 18 erfolgt mittels der Antriebsspindel 2, da sich die Radialnasen 23 am Bajonettring 18 in den Axialnuten 6 in der Antriebsspindel 2 befinden und somit mit der Antriebsspindel 2 in Antriebsverbindung stehen. Das Verdrehen der Antriebsspindel 3 erfolgt über eine geeignete Indexierung, um die Drehung nur so weit durchzuführen, wie dies erforderlich ist, um die Bajonettklauen 28, 29 Klaue auf Klaue gegenüberliegend einzustellen. In dieser Stellung liegt die axiale Nase 24 gegenüber der Axialnut 37 in einer Bajonettklaue der Bajonettklauen 29 des Adapterrings 25.

Beim Zusammenfahren des Balkens 1 und des Bearbeitungskopfes 30 werden die Druckfedern 17 am Schutzring 16 und die Druckfedern 35 zwischen der Werkzeugspindel 31 und der Kupplungsscheibe 33 um ein gewisses Maß zusammengedrückt.

Um den Bearbeitungskopf 30 mit dem Balken 1 zu verriegeln, wird der Ringkolben 7 durch Beaufschlagung des Ringraums 11 mit Druckmittel nach rechts verschoben und zieht den Bajonettring 18 axial nach rechts. Der Bajonettring 18 zieht dabei gleichzeitig den Adapterring 25 und den Bearbeitungskopf 30 ebenfalls nach rechts, bis die Zentrierkonusse 14, 26 einander berühren und die Stirnverzahnungen 15, 27 ineinandergreifen. Der Bearbeitungskopf 30 ist nunmehr mit dem Balken 1 unverdrehbar verriegelt.

Gleichzeitig sind die radialen Nasen 23 am Bajonettring 18 aus der Axialnut 6 in die Ringnut 5 gelangt, so daß sich die Antriebswelle 2 frei drehen kann und damit die Werkzeugspindel 31 zur Bearbeitung eines Werkstücks mittels eines nicht dargestellten Werkzeugs in Drehung versetzt.

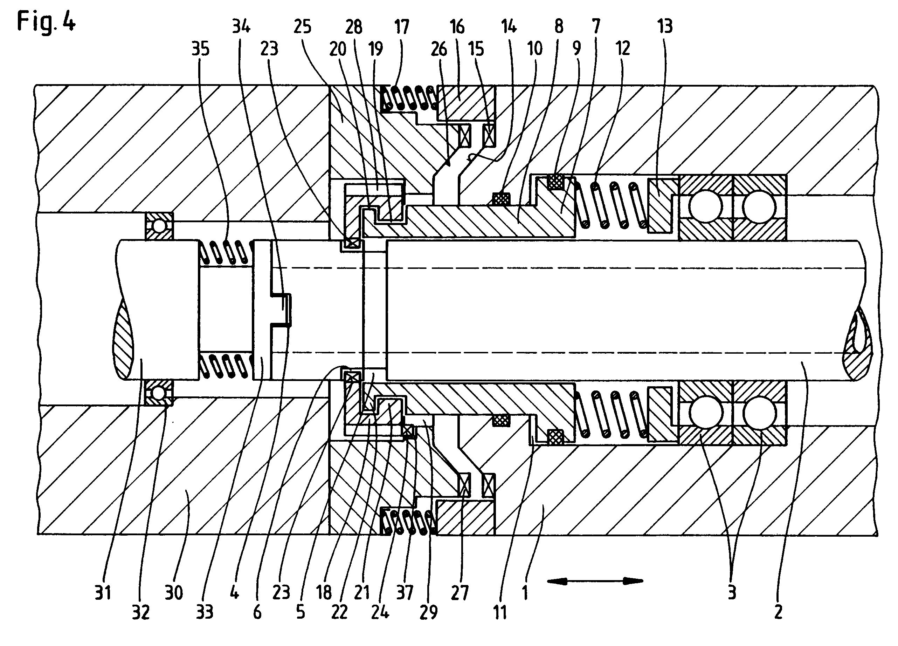

Zum Lösen der Verriegelung und Auswechseln eines Bearbeitungskopfes 30 wird die Druckmittelbeaufschlagung des Ringraums 11 aufgehoben und der Kolben 7 mit seinem Schaft 9 gelangt unter der Wirkung der Druckfedern 12 in die in Fig. 4 dargestellte Stellung. Die Druckfedern 17 verschieben gleichzeitig den Bearbeitungskopf 30 mit dem Adapterring 25 so weit, daß die Stirnverzahnungen 15, 27 nicht mehr miteinander in Eingriff stehen. Die axiale Nase 24 bleibt jedoch im Eingriff mit der Axialnut 37, während die radialen Nasen 23 wieder in den Eingriff mit den Axialnuten 6 gelangen. In dieser Stellung besteht eine Drehverbindung zwischen der Antriebsspindel 2 und dem Bearbeitungskopf 30 über die Radialnasen 23 in den Axialnuten 6 und die Axialnase 24 in der Axialnut 37. Der Bearbeitungskopf 30 läßt sich in dieser Stellung in eine beliebige Winkelstellung relativ zum Balken 1 bringen, die bei Verwendung einer Stirnverzahnung 15, 27 in sehr kleinen Winkelschritten erfolgen kann. Ist nur eine Drehung um jeweils 90° zwischen dem Bearbeitungskopf 30 und dem Balken 1 erforderlich, genügt es in diesem Fall, statt Stirnverzahnungen 15, 27 mindestens einen radial angeordneten Keil und vier radial um 90° versetzte Nuten im Bearbeitungskopf 30 bzw. im Balken 1 vorzusehen.

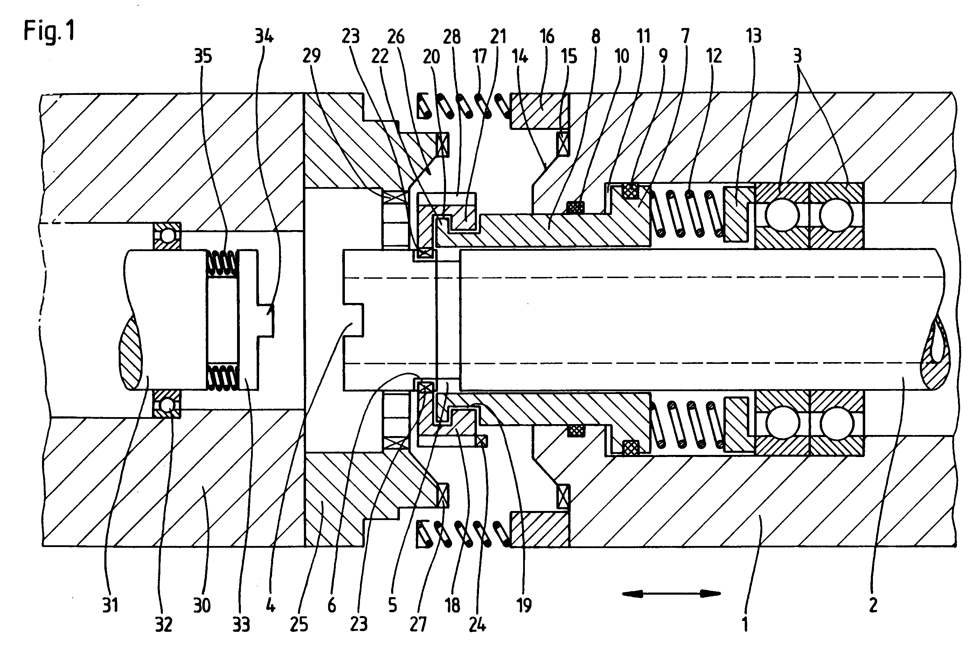

Um den Bearbeitungskopf 30 gänzlich von der Werkzeugmaschine abzukuppeln, wird der Bearbeitungskopf 30 wieder in einen freien Platz des Magazins gefahren, indem der Balken 1 entsprechend axial verschoben wird. Da der Bearbeitungskopf 30 im Ablageplatz im Magazin nach einem gewissen Weg an einem hinteren Anschlag anliegt, bewirkt die weitere Axialbewegung des Balkens 1, daß sich der Bajonettring 18 im Adapterring 25 axial verschiebt, bis die axiale Nase 24 die Axialnut 37 verlassen hat. Jetzt läßt sich der Bajonettring 18 mittels der Antriebsspindel 2 wieder in eine Stellung drehen, bei der die Bajonettklauen 28, 29 Lücke auf Lücke stehen, so wie dies in Fig. 1 dargestellt ist, so daß sich der Bajonettring 18 auf der Antriebsspindel 2 durch Axialverschiebung des Balkens 1 aus dem Adapterring 25 herausziehen läßt.

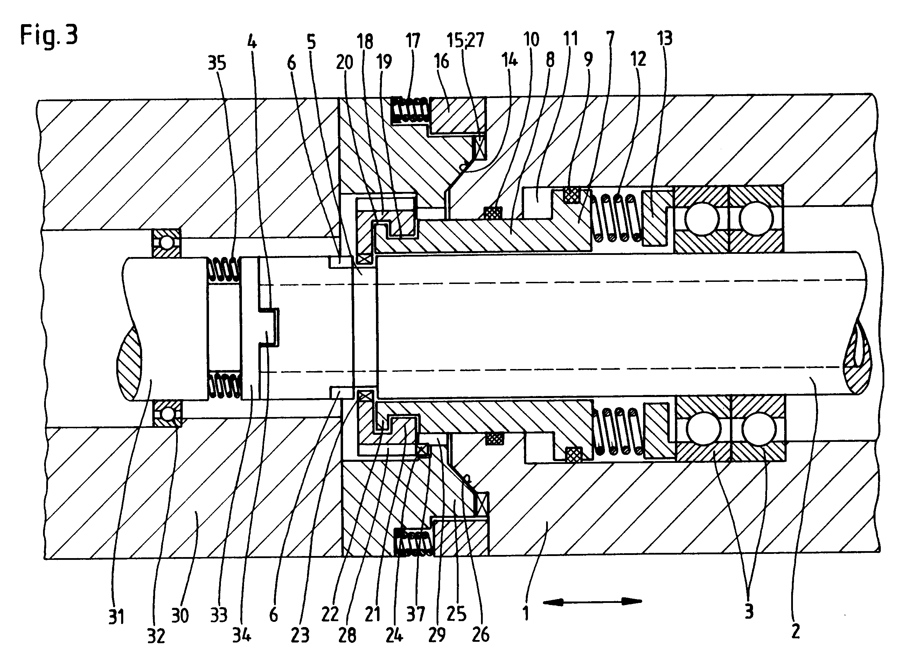

Der Ringkolben 7 kann auch doppeltwirkend ausgebildet sein und sich in drei Stellungen bewegen lassen. In diesem Fall entspricht die eine Stellung der in Fig. 1 dargestellten Stellung, bei der der Bajonettring 18 mit der Antriebsspindel 2 drehfest gekuppelt ist. In der mittleren Stellung kann der Bajonettring 18 sowohl mit der Antriebsspindel 2 als auch mit dem Adapterring 25 gekuppelt sein, wie dies in Fig. 4 dargestellt ist, jedoch muß dann die Axialnut 6 doppelte Länge aufweisen. In der dritten Stellung liegt der in Fig. 3 dargestellte Zustand vor, in dem der Bajonettring 18 nicht mehr in Drehverbindung mit der Antriebsspindel 2 steht.

## Patentansprüche

1. Werkzeugmaschine mit einer in einem Träger (1) gelagerten Arbeitsspindel (2), einem auswechselbaren, mit dem Träger kuppelbaren Bearbeitungskopf (30), einer mit der Arbeitsspindel (2) kuppelbaren Werkzeugspindel (31) im Bearbeitungskopf (30) und radialen, komplementären Bajonettklauen (28; 29) zum Verriegeln des Bearbeitungskopfes am Träger, **dadurch gekennzeichnet,** daß die Arbeitsspindel (2) direkt in dem Träger (1) drehbar und axial unverschiebbar gelagert und nur zusammen mit dem Träger axial verschiebbar ist und daS ein wechselweise mit der Antriebsspindel (2) und dem Bearbeitungskopf (30) drehfest kuppelbarer und entkuppelbarer, axial mittels einer oder mehreren Hydraulik- oder Pneumatik-Kolben-Zylinder-Einheit(en) (7, 8) verschiebbarer drehbarer Bajonettring (18) vorgesehen ist, wobei die Bajonettklauen am Bajonettring (18) und am Bearbeitungskopf (30) vorgesehen sind.

2. Werkzeugmaschine nach Anspruch 1, **dadurch gekennzeichnet,** daß am Bearbeitungskopf (30) die Bajonettklauen (29) nach innen gerichtet sind und die Bajonettklauen (28) des drehbar, axial verschiebbaren Bajonettrings (18) nach außen gerichtet sind.

3. Werkzeugmaschine nach Anspruch 1 oder 2, **dadurch gekennzeichnet,** daß die Hydraulik-Kolben-Zylinder-Einheit (7, 8) als abgedichtet im Träger (1) geführter Ringkolben (7) ausgebildet und koaxial zur Antriebsspindel (2) angeordnet ist.

4. Werkzeugmaschine nach Anspruch 3, **dadurch gekennzeichnet,** daß der Ringkolben (7) mittels Federn (12) in Richtung des Arbeitsspindelendes und durch Druckbeaufschlagung in die entgegengesetzte Richtung bewegbar ist.

5. Werkzeugmaschine nach Anspruch 3 oder 4, **dadurch gekennzeichnet,** daß der Bajonettring (18) mit dem Ringkolben (7) drehbar und unverschiebbar gekuppelt ist.

6. Werkzeugmaschine nach einem der Ansprüche 1 bis 5, **dadurch gekennzeichnet,** daß der Bajonettring (18) wenigstens einen radial nach innen gerichteten, wahlweise in eine Ringnut (5) oder eine Axialnut (6) in der Antriebsspindel (2) eingreifenden Vorsprung (23) aufweist.

7. Werkzeugmaschine nach einem der Ansprüche 1 bis 6, **dadurch** **gekennzeichnet,** daß der Bajonettring (18) wenigstens einen axial gerichteten, in eine Axialnut (37) im Bereich der Bajonettklauen (29) des Bearbeitungskopfes (30) einschiebbaren Vorsprung aufweist.

8. Werkzeugmaschine nach einem der Ansprüche 1 bis 7, **dadurch gekennzeichnet,** daß die Bajonettklauen (29) des Bearbeitungskopfes (30) Teil eines daran befestigten Adapterrings (25) sind.

9. Werkzeugmaschine nach Anspruch 8, **dadurch gekennzeichnet,** daß der Adapterring (25) und der Träger (1) zusammenwirkende Zentrierkonusse (26; 14) aufweisen.

10. Werkzeugmaschine nach einem der Ansprüche 1 bis 9, **dadurch gekennzeichnet,** daß der Bearbeitungskopf (30) und der Träger (1) miteinander zusammenwirkende Stirnverzahnungen (27; 15) aufweisen.

11. Werkzeugmaschine nach einem der Ansprüche 1 bis 10, **dadurch gekennzeichnet,** daß zwischen dem Träger (1) und dem Bearbeitungskopf Pederelemente (17) angeordnet sind.

12. Werkzeugmaschine nach einem der Ansprüche 1 bis 11, **dadurch gekennzeichnet,** daß auf der Werkzeugspindel (31) eine axial verschiebbare, federbeaufschlagte, mit der Werkzeugspindel (31) drehfest gekuppelte und mit der Antriebsspindel (2) kuppelbare Kupplungsscheibe (33) angeordnet ist.

13. Werkzeugmaschine nach einem der Ansprüche 1 bis 12, **dadurch gekennzeichnet,** daß die einander zugekehrten Stirnseiten des Trägers (1) und des Bearbeitungskopfes (30) Energieandockungsvorrichtungen (38) aufweisen.

## Claims

1. A machine tool with a work spindle (2) mounted in a carrier (1), an exchangeable tool-head (30) which can be coupled to the carrier, a tool-spindle (31) in the tool-head (30) which can he coupled to the work spindle (2) and radial, complementary bayonet claws (28; 29) for locking the tool-head on to the carrier, characterized in that the work spindle (2) is mounted directly in the carrier (1) unable to slide in rotation or axially and can only slide axially together with the carrier, and that a slidable rotatable bayonet ring (18) is provided that alternately with the drive spindle (2) and the tool-head (30) can he non-rotatably coupled and disengaged, axially by means of one or several hydraulic or pneumatic piston cylinder unit(s) (7, 8), whereby the bayonet claws are furnished on the bayonet ring (18) and on the tool-head (30).

2. The machine tool according to claim 1, characterized in that on the tool-head (30) the bayonet claws (29) are directed inwards and the bayonet claws (28) of the rotatably and axially slidable bayonet ring (18) are directed outwards.

3. The machine tool according to claim 1 or 2, characterized in that the hydraulic piston cylinder unit (7, 8) is arranged to he sealed off in the carrier (1) driven ring piston (7) and is coaxial to the drive spindle (2).

4. The machine tool according to claim 3, characterized in that the ring piston (7) is movable by means of springs (12) in the direction of the work spindle end and by the application of pressure in the opposite direction.

5. The machine tool according to claim 3 or 4, characterized in that the bayonet ring (18) is rotatably and non-slidably coupled with the rang piston (7).

6. The machine tool according to one of claims 1 to 5, characterized in that the bayonet ring (18) has at least one meshing projection (23) in the drive spindle (2) which is directed radially inwards, either in an annular groove (5) or an axial groove (6).

7. The machine tool according to one of claims 1 to 6, characterized in that the bayonet rang (18) has at least one extending projection which is axially directed in an axial groove (37) in the area of the bayonet claws (29) of the tool-head (30).

8. The machine tool according to one of claims 1 to 7, characterized in that the bayonet claws (29) of the tool-head (30) are part of an adapter ring (25) attached thereto.

9. The machine tool according to claim 8, characterized in that the adapter ring (25) and the carrier (1) have concurrent centring tapered ends (26; 14).

10. The machine tool according to one of claims 1 to 9, characterized in that the tool-head (30) and the carrier (1) have concurrent end gearing (27; 15).

11. The machine tool according to one of claims 1 to 10, characterized in that spring elements (17) are disposed between the carrier (1) and the tool-head.

12. The machine tool according to one of claims 1 to 11, characterized in that on the machine spindle (31) an axially slidable spring pressured coupling disc (33) is arranged which is non-rotatably coupled with the machine spindle (31) and can be coupled with the drive spindle (2).

13. The machine tool according to one of claims 1 to 12, characterized in that the facing front sides of the carrier (1) and the tool-head (30) have energy docking devices (38).

## Revendications

1. Machine-outil comportant une broche de travail (2) montée dans un support (1), une tête d'usinage (30) interchangeable, pouvant être accouplée avec le support, une broche d'outil (31) pouvant être accouplée avec la broche de travail (2) dans la tête d'usinage (30) et des griffes à baïonnette (28 ; 29) complémentaires, radiales, pour le verrouillage de la tête d'usinage sur le support, caractérisée en ce que la broche de travail (2) est montée directement dans le support (1) de manière à pouvoir tourner et à coulisser axialement et de manière à ne pouvoir coulisser axialement qu'avec le support et en ce qu'il est prévu un anneau à baïonnette (18) pouvant être accouplé solidaire en rotation et désaccouplé avec la broche d'entraînement (2) et la tête d'usinage (30), pouvant coulisser et tourner axialement au moyen d'une ou de plusieurs unités à cylindre et piston (7, 8) hydrauliques ou pneumatiques, les griffes à baïonnette étant prévues sur l'anneau à baïonnette (18) et sur la tête d'usinage (30).

2. Machine-outil selon la revendication 1, caractérisée en ce que sur la tête d'usinage (30), les griffes à baïonnette (29) sont dirigées vers l'intérieur et les griffes à baïonnette (28) de l'anneau à baïonnette (18) tournant, coulissant axialement, sont dirigées vers l'extérieur.

3. Machine-outil selon la revendication 1 ou 2, caractérisée en ce que l'unité à cylindre et piston hydraulique (7, 8) est réalisée sous la forme d'un piston annulaire (7) guidé de manière étanche dans le support (1) et est montée coaxialement à la broche d'entraînement (2).

4. Machine-outil selon la revendication 3, caractérisée en ce que le piston annulaire (7) est déplaçable au moyens de ressorts (12) en direction de l'extrémité de la broche de travail et dans le sens opposé, sous l'action d'une pression.

5. Machine-outil selon la revendication 3 ou 4, caractérisée en ce que l'anneau à baïonnette (18) est accouplé tournant et non coulissant avec le piston annulaire (7).

6. Machine-outil selon l'une des revendications 1 à 5, caractérisée en ce que l'anneau à baïonnette (18) comporte au moins une partie saillante (23) dirigée radialement vers l'intérieur, s'engageant au choix dans une rainure annulaire (5) ou une rainure axiale (6) de la broche d'entraînement (2).

7. Machine-outil selon l'une des revendications 1 à 6, caractérisée en ce que l'anneau à baïonnette (18) comporte au moins une partie saillante dirigée axialement, à introduire dans une rainure axiale (37) dans la zone des griffes à baïonnette (29) de la tête d'usinage (30).

8. Machine-outil selon l'une des revendications 1 à 7, caractérisée en ce que les griffes à baïonnette (22) de la tête d'usinage (30) font partie d'un anneau d'adaptateur (25) fixé sur celle-ci.

9. Machine-outil selon la revendication 8, caractérisée en ce que l'anneau d'adaptateur (25) et le support (1) comportent des cônes de centrage (26 ; 14) coopérants.

10. Machine-outil selon l'une des revendications 1 à 9, caractérisée en ce que la tête d'usinage (30) et le support (1) comportent des dentures frontales (27 ; 15) coopérant entre elles.

11. Machine-outil selon l'une des revendications 1 à 10, caractérisée en ce que des éléments à ressort (17) sont placés entre le support (1) et la tête d'usinage.

12. Machine-outil selon l'une des revendications 1 à 11, caractérisée en ce qu'il est prévu sur la broche d'outil (31) un disque d'accouplement (33) coulissant axialement, soumis à l'action d'un ressort, accouplé solidaire en rotation avec la broche d'outil (31) et pouvant être accouplé avec la broche d'entraînement (2).

13. Machine-outil selon l'une des revendications 1 à 12, caractérisée en ce que les côtés frontaux tournés l'un vers l'autre du support (1) et de la tête d'usinage (30) comportent des dispositifs d'accouplement de lignes de transmission d'énergie (38).
